# FASCICULE DE BREVET EUROPEEN

(11) **EP 2 139 705 B1**
(45) Date de publication et mention de la délivrance du brevet: **30.11.2011**
(21) Numéro de dépôt: 08787813.8
(22) Date de dépôt: 19.03.2008
(51) Int. Cl.: B60C 17/06

(54) **DISPOSITIF DE ROULAGE A PLAT POUR VEHICULE AUTOMOBILE ET ENSEMBLE MONTE L'INCORPORANT**
NOTLAUFVORRICHTUNG FÜR FAHRZEUGE UND DAMIT MONTIERTE ANORDNUNG
FLAT RUNNING DEVICE FOR AUTOMOBILE AND MOUNTED ASSEMBLY INCLUDING SAME

(30) Priorité: 23.03.2007 FR 0702125
(43) Date de publication de la demande: 06.01.2010
(73) Titulaire: Hutchinson, 75008 Paris (FR)
(72) Inventeur: AUVRAY, Stéphane, 60260 Lamorlaye (FR); MOUTON, Stéphane, F-74100 Annemasse (FR)
(74) Mandataire: Bolinches, Michel Jean-Marie
(86) Numéro de dépôt international: PCT/FR2008/000360
(87) Numéro de publication internationale: WO 2008/132348

(56) Documents cités:
- EP-A1- 0 104 977
- EP-A2- 0 159 274
- FR-A- 2 383 031
- FR-A- 2 776 963
- US-A- 4 334 565

## Description

La présente invention concerne un dispositif de roulage à plat destiné à équiper un ensemble monté sans chambre à air pour véhicule automobile et un tel ensemble monté incorporant ce dispositif, permettant de parcourir une distance importante à vitesse relativement élevée lorsque l'ensemble monté est partiellement ou totalement dégonflé.

Pour une jante monobloc, les dispositifs de roulage à plat connus sont généralement constitués par un anneau rigide de soutien qui est monté serré autour d'une jante de roue à l'intérieur d'une enveloppe de pneumatique. Cet anneau est par exemple formé soit d'une seule pièce aux flancs relativement souples pouvant être continue ou bien d'une pièce souple ouverte (i.e. fendue, à laquelle on a retiré une tranche), soit d'au moins deux pièces rigides en arc de cercle ou secteurs.

Le document WO-A-79/00612 présente un dispositif de roulage à plat pour une jante monobloc à creux de jante circonférentiel, dont l'anneau est formé de plusieurs secteurs réalisés chacun en deux parties qui sont axialement juxtaposées en enjambant ce creux de jante, et qui sont articulées entre elles pour permettre d'amener un talon de l'enveloppe de pneumatique dans le creux de jante lors du montage. Chacune de ces deux parties est pourvue d'une ceinture de serrage en caoutchouc renforcé qui est conçue pour les maintenir axialement et radialement au contact de la jante.

Le document EP-A-104 977 divulgue un dispositif de roulage à plat pour jante de roue à plusieurs blocs recevant une enveloppe de pneumatique, qui comprend un anneau de soutien de l'enveloppe en roulage à plat et une ceinture annulaire de serrage enserrant circonférentiellement l'anneau et appliquée sur un renfoncement radial circonférentiel de la face de soutien de l'anneau.

Un inconvénient majeur des dispositifs de roulage à plat connus pour jantes monobloc réside notamment dans la rigidité de l'anneau utilisé, qui ne permet qu'une absorption relative des chocs en roulage à plat.

Un autre inconvénient de ces dispositifs connus pour jantes monobloc réside dans la nécessité d'utiliser autant d'anneaux que de profils de creux de jante différents aptes à les recevoir.

Un but de la présente invention est de proposer un dispositif de roulage à plat destiné à équiper un ensemble monté sans chambre à air pour véhicule automobile qui comprend une jante de roue et une enveloppe de pneumatique montée sur la jante, le dispositif étant destiné à soutenir l'enveloppe suite à une chute de pression de gonflage à l'intérieur de l'ensemble monté, dispositif qui permette de remédier aux inconvénients précités notamment par une optimisation du calage radial en roulage à l'état gonflé dudit anneau sur la jante (i.e. en limitant le phénomène de « centrifugation » de l'anneau par effet centrifuge) et par une adaptation satisfaisante de ce dispositif à différents types et géométries de jantes monoblocs.

Ce dispositif selon l'invention comprend :
- une structure annulaire de soutien qui comporte un anneau présentant une face de soutien radialement externe destinée à soutenir l'enveloppe en roulage à plat, et
- au moins une ceinture annulaire de serrage enserrant circonférentiellement l'anneau de sorte à le maintenir sensiblement au contact de la jante en roulage,
au moins un renfoncement radial étant formé circonférentiellement dans ladite face de soutien, ladite ou chaque ceinture de serrage étant appliquée sur ce renfoncement en étant radialement en retrait par rapport à ladite face de soutien.

A cet effet, un dispositif de roulage à plat selon l'invention est tel que ladite structure de soutien comporte des moyens pour la caler dans ledit creux de jante, en la montant en appui sur au moins une paroi latérale dudit creux, une face radialement interne de ces moyens de calage étant conçue pour épouser le profil axial d'un fond dudit creux.

On notera que ces moyens de calage permettent d'utiliser un seul et même anneau pour des jantes monobloc ayant des profils de creux de jante différents, notamment pour les pentes respectives de ces creux.

On notera également que ce montage de la ou chaque ceinture de serrage en retrait de la face de soutien de l'anneau permet notamment de maintenir cet anneau sur la jante en s'opposant efficacement au phénomène de « centrifugation » de l'anneau en roulage à l'état gonflé, tout en protégeant la ou chaque ceinture en faisant en sorte qu'elle n'interfère pas avec l'enveloppe de pneumatique en roulage à plat.

Ces moyens de calage de l'anneau sur la jante peuvent avantageusement, selon un premier mode de l'invention, faire partie intégrante dudit anneau, lequel forme alors ladite structure qui est monobloc, en étant par exemple constitués d'une lèvre circonférentielle qui est axialement en saillie sur au moins une face latérale de l'anneau et qui est intégrée à ce dernier.

Selon un second mode de l'invention, ces moyens de calage de l'anneau sur la jante peuvent comporter une pluralité de pattes axiales rigides espacées dans la direction circonférentielle (avantageusement en matière plastique) qui sont fixées audit anneau, par exemple par clipsage ou collage, chaque patte de calage présentant en l'un de ses côtés une excroissance axiale destinée à appuyer sur ladite paroi latérale dudit creux de jante.

Selon un premier exemple de ce second mode, lesdites pattes de calage sont rapportées sous ledit anneau, pouvant être fixées à ladite face radialement interne de l'anneau en faisant saillie radialement vers l'intérieur de cette face ou bien, en variante, être logées dans des évidements axiaux (tels que des rainures ou des fentes pratiquées sur une hauteur radiale suffisante pour contenir entièrement ces pattes) qui sont formés dans l'anneau en étant confinées à l'intérieur de ce dernier.

On notera que ces pattes axiales de calage peuvent permettre d'assurer une fonction de déport de l'anneau par rapport au creux de jante, en positionnant cet anneau de manière axialement décalée par rapport à l'une des parois latérales dudit creux.

Selon un second exemple de ce second mode, lesdites pattes de calage présentent chacune sensiblement une forme de T inversé, dont la base axiale s'étend sous ledit anneau et est destinée à épouser le fond dudit creux de jante en faisant axialement saillie dudit côté par ladite excroissance, et dont le jambage radial affleure ledit renfoncement radial, lequel est en partie formé par ces pattes.

Selon un troisième mode de réalisation de l'invention, lesdits moyens de calage comportent une semelle annulaire dont la face radialement interne est destinée à épouser le fond dudit creux de jante et qui présente en l'un de ses côtés une excroissance axiale circonférentielle destinée à appuyer sur ladite paroi latérale dudit creux de jante et qui est surmontée par ledit anneau.

On notera que cette semelle peut être surmontée par ledit anneau sans être solidarisée avec ce dernier (i.e. en étant montée indépendamment de l'anneau), ou bien en étant fixée à ce dernier.

Selon un premier exemple de ce troisième mode, ladite semelle est formée d'un seul tenant, étant de préférence fendue.

Selon un second exemple de ce troisième mode, ladite semelle est formée d'une pluralité de secteurs de semelle en arcs de cercle qui sont juxtaposés deux à deux dans la direction circonférentielle.

Selon une autre caractéristique de l'invention, ledit ou l'un au moins desdits renfoncement(s) est avantageusement formé d'une gorge circonférentielle pour l'anneau.

On notera que l'on pourrait également prévoir de former le ou chaque renfoncement radial sur la face de soutien de l'anneau par un épaulement latéral conférant à ce renfoncement un bord latéral défini par l'une des deux faces latérales de l'anneau.

Avantageusement, ledit anneau peut être réalisé en un matériau élastomère ou élastomère thermoplastique, de sorte à amortir les chocs en roulage tant à l'état gonflé qu'à plat, et lesdits moyens de calage sont réalisés en une matière plastique. Dans ce cas, ledit anneau peut être formé d'un seul tenant en étant de type fermé, et il peut alors avantageusement comporter au moins une zone rétrécie au moins dans la direction radiale par rapport au reste de l'anneau, de sorte à augmenter la déformabilité dudit anneau lors de son insertion à l'intérieur de l'ensemble monté. En variante, cet anneau fermé pourrait ne pas comporter cette ou ces zone(s) rétrécie(s), mais être de par son matériau constitutif suffisamment élastiquement déformable pour faciliter l'insertion précitée.

On notera qu'un tel anneau élastomère est avantageusement de type compact (i.e. non cellulaire ou alvéolaire), et qu'il peut par exemple être à base de caoutchouc naturel (NR) ou d'un élastomère thermoplastique.

On notera également que, dans le cas mentionné ci-dessus où l'anneau comporte une ou plusieurs zones rétrécies au moins radialement, ces rétrécissements peuvent être formés tant dans la direction radiale de la hauteur de l'anneau que dans la direction axiale de la largeur de ce dernier. Ces zones de rétrécissement permettent ainsi, par effet élastique, de faciliter l'insertion du dispositif de roulage à plat au-dessus d'un rebord de jante et à l'intérieur de l'enveloppe de pneumatique, via le pliage et/ou la torsion de l'anneau à la manière d'articulations formées par ces zones, et/ou l'extension de cet anneau pour permettre son passage au-dessus du rebord de jante.

Selon une variante de l'invention, ledit anneau peut être réalisé en un matériau thermoplastique, par exemple à base d'un polyamide.

Qu'il soit réalisé en un matériau élastomère ou plastique, ledit anneau du dispositif selon l'invention peut être formé d'un seul tenant en étant de type ouvert via deux extrémités circonférentielles disposées en regard l'une de l'autre, ou bien de type scindé en plusieurs secteurs indépendants (i.e. non connectés deux à deux entre eux) en arc de cercle qui sont juxtaposés circonférentiellement. Dans ces deux cas, ledit anneau peut être alors avantageusement pourvu d'un lien élastique annulaire sur le fond dudit ou de chaque renfoncement, ce lien élastique étant destiné à maintenir ledit anneau dans ledit creux de jante et étant surmonté par ladite ceinture de serrage.

Il est essentiel de noter que la structure de soutien selon l'invention de type à anneau de soutien et à moyens de calage dans le creux de jante présente, d'une part, suffisamment de souplesse pour pouvoir être montée sur la jante monobloc en passant au-dessus des crochets ou rebords de jante, après avoir été insérée à l'intérieur de l'enveloppe de pneumatique, et, d'autre part, suffisamment de rigidité pour être maintenue correctement positionnée dans le fond du creux de jante lors du montage.

Selon une autre caractéristique de l'invention, ladite ou chaque ceinture de serrage est avantageusement de type métallique, à serrage réglable et verrouillable par des moyens mécaniques, par exemple via un collier à tourillons. En variante, ladite ou chaque ceinture de serrage pourrait être de type sangle fermée en tissu de diamètre ajustable, par exemple.

Cette ceinture métallique doit être suffisamment flexible pour être facilement insérable à l'intérieur de l'enveloppe de pneumatique, et sensiblement indéformable vis-à-vis des efforts transmis en roulage une fois la ceinture verrouillée, pour s'opposer efficacement à la « centrifugation » précitée.

On notera également que le mécanisme de serrage de la ou de chaque ceinture peut être mis en oeuvre tant dans le plan de la roue que, plus avantageusement, selon un axe perpendiculaire à ce plan (ce qui est moins contraignant pour le montage).

De préférence, ledit anneau présente sensiblement, vu en section axiale, une forme de U dont la base est montée dans ledit creux de jante et qui définit ledit renfoncement en forme de gorge recevant ladite ceinture de serrage.

Un ensemble monté sans chambre à air pour véhicule automobile selon l'invention, comprenant une jante de roue, une enveloppe de pneumatique montée contre des rebords axialement interne et externe de ladite jante et un dispositif de roulage à plat monté sur ladite jante et destiné à soutenir ladite enveloppe suite à une chute de pression de gonflage à l'intérieur dudit ensemble monté, est caractérisé en ce que ledit dispositif est tel que défini ci-dessus.

Avantageusement, cet ensemble monté est tel que lesdits moyens de calage, qui définissent ladite face radialement interne de ladite structure de soutien, sont montés sur ce creux de jante sur toute la largeur axiale de ce dernier, de telle sorte que cette structure soit axialement distante desdits rebords de jante, ladite ou chaque ceinture de serrage étant de type métallique à serrage réglable et verrouillable par des moyens mécaniques.

Ce dispositif de roulage à plat présente notamment les avantages suivants, en comparaison des dispositifs de roulage à plat existants pour jantes monoblocs :
- les dispositifs selon l'invention à pattes axiales ou à semelle de calage permettent de positionner de manière simple (et donc peu coûteuse) un seul et même anneau sur une multitude de jantes, en fixant ou en intégrant ces pattes ou cette semelle à l'anneau), et
- dans le cas préférentiel précité ou l'anneau est en matériau élastomère, le dispositif correspondant permet d'amortir les chocs de manière satisfaisante, contrairement à la plupart des dispositifs qui sont de type à anneau rigide,
- un montage relativement simple du dispositif sur la jante, avec avantageusement un seul point de serrage.

Dans la présente description, les expressions « axialement interne » et « axialement externe » se réfèrent respectivement aux côtés de la jante de roue destinés à être tournés vers l'intérieur et vers l'extérieur du véhicule automobile, et les expressions « radialement interne » et « radialement externe » se réfèrent respectivement à des directions radiales par rapport à la jante qui se rapprochent et s'éloignent de celle-ci.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en demi-coupe axiale d'un ensemble monté à jante monobloc de type à creux de jante qui incorpore un dispositif de roulage à plat selon un premier mode de réalisation de l'invention,
la figure 2 est une vue de côté de l'anneau du dispositif de la figure 1 dans un premier exemple de réalisation selon l'invention,
la figure 3 est vue de côté de l'anneau du dispositif de la figure 1 dans un second exemple de réalisation selon l'invention,
la figure 4 est une vue de côté de l'anneau du dispositif de la figure 1 dans un troisième exemple de réalisation selon l'invention,
la figure 5 est une vue de côté de l'anneau du dispositif de la figure 1 dans un quatrième exemple de réalisation selon l'invention,
la figure 6 est une vue en demi-coupe axiale d'un ensemble monté à jante monobloc avec creux de jante qui incorpore un premier exemple de l'invention de dispositif de roulage à plat selon un second mode de réalisation de l'invention,
la figure 7 est une vue en demi-coupe axiale d'un ensemble monté à jante monobloc qui incorpore une variante de ce premier exemple de l'invention de dispositif de roulage à plat selon ce second mode,
les figures 8 et 9 sont respectivement des vues partielles de côté des anneaux des dispositifs selon les figures 6 et 7,
la figure 10 est une vue en demi-coupe axiale d'un ensemble monté à jante à jante monobloc qui incorpore un second exemple de dispositif de roulage à plat selon ce second mode,
la figure 11 est une vue partielle en perspective du dispositif de roulage à plat de la figure 10,
la figure 12 est une vue en demi-coupe axiale d'un ensemble monté à jante monobloc qui incorpore un dispositif de roulage à plat selon un troisième mode de réalisation de l'invention, et
la figure 13 est une vue en perspective éclatée du dispositif de roulage à plat de la figure 12.

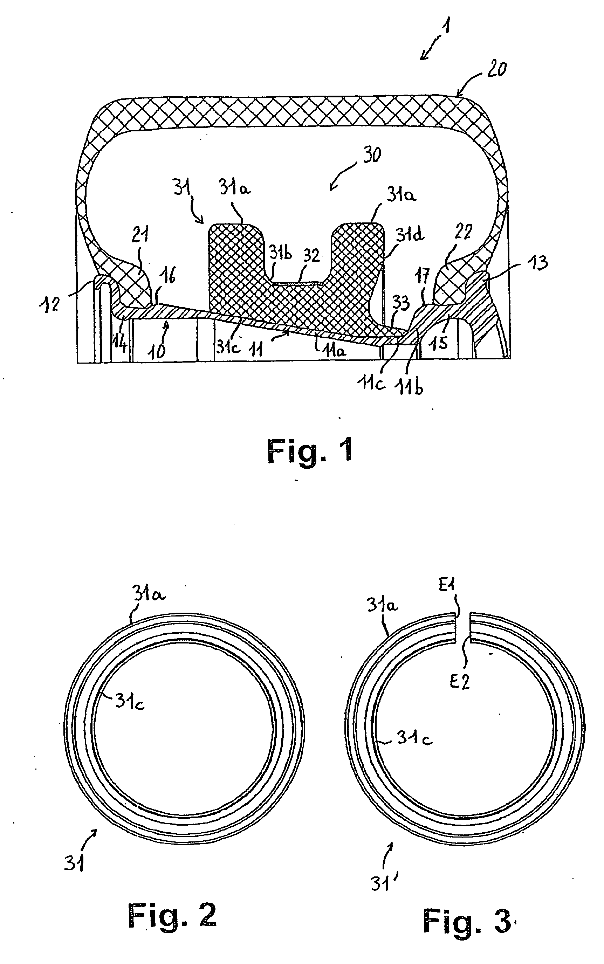

L'ensemble monté 1 illustré à la figure 1 selon le premier mode de réalisation de l'invention comprend une jante de roue 10 asymétrique de type monobloc comportant un creux de jante 11 circonférentiel, une enveloppe de pneumatique 20 montée contre des rebords axialement interne et externe 12 et 13 de la jante 10, et un dispositif de roulage à plat 30 monté dans le creux de jante 11 et destiné à soutenir l'enveloppe 20 suite à une chute de pression de gonflage à l'intérieur de l'ensemble monté 1.

La jante 10 comporte des sièges de jante axialement interne et externe 14 et 15 respectivement destinés à recevoir des talons 21, 22 de l'enveloppe 20, chaque siège de jante 14, 15 étant délimité axialement par l'un des rebords 12, 13 et, optionnellement dans l'exemple de la figure 1, par un bossage circonférentiel 16, 17 adjacent.

Dans cet exemple de réalisation, le creux de jante 11 est de type à fond 11a essentiellement oblique qui est légèrement incliné axialement vers l'extérieur et radialement vers l'intérieur et qui est délimité axialement à l'intérieur par le bossage 16 et axialement à l'extérieur par une paroi latérale axialement externe 11 b, laquelle s'étend axialement et surtout radialement vers l'intérieur à partir du bossage 17 adjacent. Plus précisément, on voit à la figure 1 que le fond 11a du creux de jante 11 se termine axialement vers l'extérieur par une courte portée sensiblement horizontale 11c se prolongeant par la paroi 11 b.

Le dispositif 30 est adapté pour être positionné sur le fond 11a du creux 11, et il comprend :
- un anneau de soutien 31 monobloc en matériau élastomère ou plastique, sensiblement en forme de U dans cet exemple de réalisation et présentant une face de soutien 31 a radialement externe qui est destinée à soutenir l'enveloppe 20 en roulage à plat et dans laquelle est formée une gorge circonférentielle 31 b définie par la base du U, et
- une ceinture annulaire de serrage 32 métallique à serrage réglable et verrouillable par exemple via un collier à tourillons (non représenté), qui est appliquée sur la gorge 31 b en étant radialement en retrait par rapport à la face de soutien 31 a (définie à la figure 1 par les sommets radialement externes des deux ailes du U) et de manière à enserrer circonférentiellement l'anneau 31, de sorte à le maintenir au contact de la jante 10 en roulage.

Comme illustré à la figure 1, la profondeur de la gorge 31 b est relativement importante par rapport à la hauteur radiale moyenne de l'anneau 31, étant par exemple égale à la moitié environ de cette hauteur radiale moyenne séparant la face de soutien 31 a de la face radialement interne 31 c de l'anneau 31.

Cette face radialement interne 31c est conçue pour épouser le profil axial du creux de jante 11, i.e. dans cet exemple tant sa portion principale oblique 11a que la portée 11c. A cet effet, l'anneau 31 comporte des moyens 33 pour le caler dans le creux de jante 11, constitués dans cet exemple d'une lèvre circonférentielle qui est formée axialement en saillie sur la face latérale axialement externe 31d de l'anneau 31 et qui fait partie intégrante de l'anneau 31. Cette lèvre de calage 33 présente une largeur axiale de l'ordre de celle de la portée 11 c, étant conçue pour être appliquée sur cette dernière et au contact de la paroi latérale externe 11 b du creux de jante 11.

L'anneau 31 selon le premier exemple de ce premier mode de l'invention qui est illustré à la figure 2 est spécifiquement réalisé en caoutchouc et est formé d'un seul tenant en présentant une structure fermée.

L'anneau 31' selon le second exemple de ce premier mode qui est illustré à la figure 3 peut être réalisé tant en caoutchouc qu'en matière plastique. Cet anneau 31' est également formé d'un seul tenant mais il est ouvert (i.e. fendu en une tranche axiale, de sorte à présenter deux extrémités circonférentielles E1 et E2 disposées en regard l'une de l'autre). Avantageusement, on peut disposer un lien élastique annulaire (non illustré) sur la gorge 31 b de l'anneau 31' avant d'y appliquer la ceinture de serrage 32, pour maintenir cet anneau 31' correctement positionné dans le creux de jante 11 lors du montage.

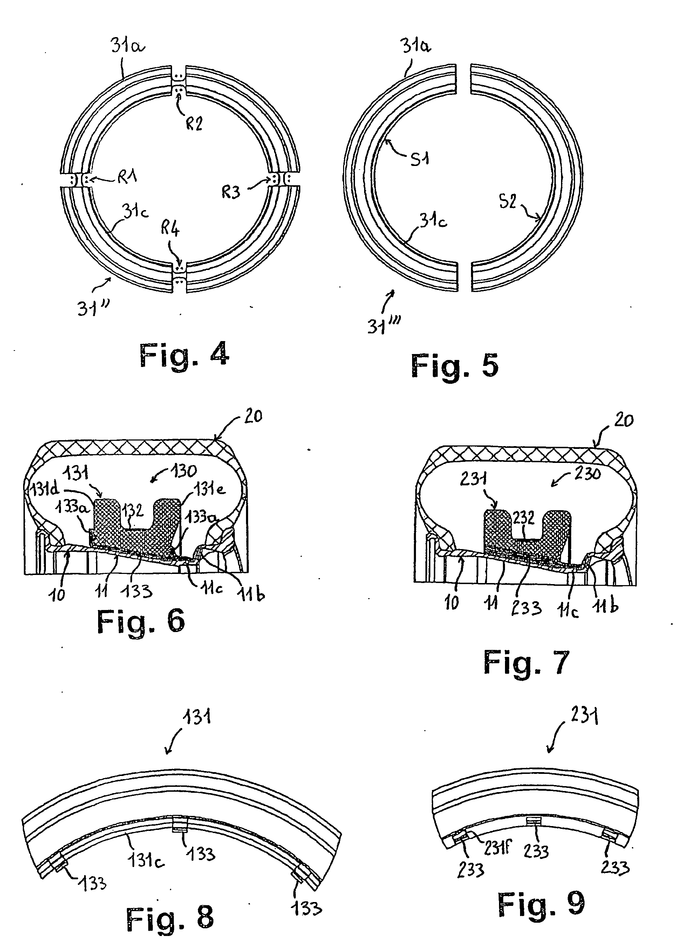

L'anneau 31" selon le troisième exemple de ce premier mode qui est illustré à la figure 4 est spécifiquement réalisé en caoutchouc, et il comporte une pluralité de zones rétrécies R1, R2, R3 et R4 (au nombre de quatre dans cet exemple de réalisation) qui présentent une hauteur radiale nettement réduite par rapport à celle du reste de l'anneau 31", de sorte à augmenter la déformabilité de ce dernier lors de son insertion à l'intérieur de l'ensemble monté 1. Ces zones de rétrécissement R1 à R4 permettent, par effet élastique, de faciliter l'insertion du dispositif 30 au-dessus d'un rebord de jante 12, 13 et à l'intérieur de l'enveloppe 20, via le pliage et/ou la torsion de l'anneau 31" à la manière d'articulations formées par ces zones R1 à R4.

L'anneau 31"' selon le quatrième exemple de ce premier mode qui est illustré à la figure 5 peut être réalisé tant en caoutchouc qu'en matière plastique. Cet anneau 31"' est scindé en une pluralité de secteurs S1 et S2 en arc de cercle (au nombre de deux dans cet exemple) qui sont juxtaposés circonférentiellement et qui sont indépendants (i.e. qui ne sont pas connectés deux à deux entre eux). Avantageusement, on peut disposer un lien élastique annulaire sur la gorge 31b de l'anneau 31"' avant d'y appliquer la ceinture de serrage 32, pour maintenir cet anneau 31"' correctement positionné dans le creux de jante 11 lors du montage.

Le montage du dispositif de roulage à plat 30 à l'intérieur de l'ensemble monté 1, avant gonflage et équilibrage de ce dernier, comprend essentiellement les étapes suivantes :
- insertion de l'anneau 31, 31', 31", 31"' optionnellement équipé de la ceinture 32 en position non serrée à l'intérieur de l'enveloppe 20,
- passage sur la jante 10 d'un talon 21 de l'enveloppe 20 contenant le dispositif 30,
- passage sur la jante 10 de l'anneau 31, 31', 31", 31 "' équipé de la ceinture 32 non serrée,
- optionnellement, dans le cas où l'anneau 31, 31', 31", 31"' inséré à l'intérieur de l'enveloppe 20 est dépourvu de la ceinture 32, montage de cette dernière sur cet anneau,
- serrage de l'anneau 31, 31', 31", 31"' contre la jante 10 via un serrage appliqué à la ceinture 32, par exemple au moyen du collier à tourillons précité, et
- passage du second talon 22 de l'enveloppe 20 sur la jante 10 pour terminer le montage.

Le dispositif de roulage à plat 130 selon la première variante de la figure 1 qui est illustrée aux figures 6 et 8 se différencie uniquement du dispositif 30 précité, en ce qu'il comporte des pattes axiales rigides de calage 133 à titre de moyens de calage de l'anneau 131 équipé de la ceinture 132 sur le creux de jante 11 de la jante 10, en lieu et place de la lèvre de calage 33 intégrée à l'anneau 31. Ces pattes axiales 133, avantageusement réalisées en matière plastique, sont régulièrement espacées sur la circonférence de l'anneau 131 en étant rapportées sous ce dernier, par exemple par clipsage ou collage.

Comme illustré à la figure 6, chaque patte 133 présente, vue en section axiale, sensiblement une forme de « F » couché avec les deux pointes 133a qui sont dirigées vers le haut et qui enserrent la partie radialement interne des deux faces latérales 131d et 131e de l'anneau 131, alors que le bas du jambage du « F » est appliqué sur la portée 11c terminant le creux de jante 11 en prenant appui sur la paroi latérale externe 11 b de ce dernier. Comme illustré à la figure 8, chaque patte 133 est dans ce cas fixée sous la face radialement interne 131c de l'anneau 131 (voir figure 8) en faisant saillie radialement vers l'intérieur de cette face 131c.

Le dispositif de roulage à plat 230 selon la seconde variante de la figure 1 qui est illustrée aux figures 7 et 9 se différencie uniquement du dispositif 130 des figures 6 et 8, en ce que les pattes axiales rigides de calage 233 qui sont rapportées sous l'anneau 231 équipé de la ceinture 232 présentent un profil sensiblement droit (vu en section axiale) à la manière d'une semelle, et sont respectivement logées dans des rainures ou fentes axiales 231f formées dans l'anneau 231 en étant confinées à l'intérieur de ce dernier (i.e. ces pattes 233 sont encastrées dans le volume interne de l'anneau 231).

On notera que ces pattes de calage 133, 233 permettent d'utiliser un même anneau 131, 231 pour des jantes monobloc 10 ayant divers profils de creux de jante 11, et qu'elles permettent d'assurer une fonction de déport de l'anneau 131, 231 par rapport au creux 11, en le positionnant de manière axialement décalée par rapport à la paroi latérale 11b du creux 11. Ces pattes de calage 133, 233 permettent ainsi, en déportant l'anneau 131, 231, de libérer un espace suffisant pour le montage du second talon 22 de l'enveloppe 20.

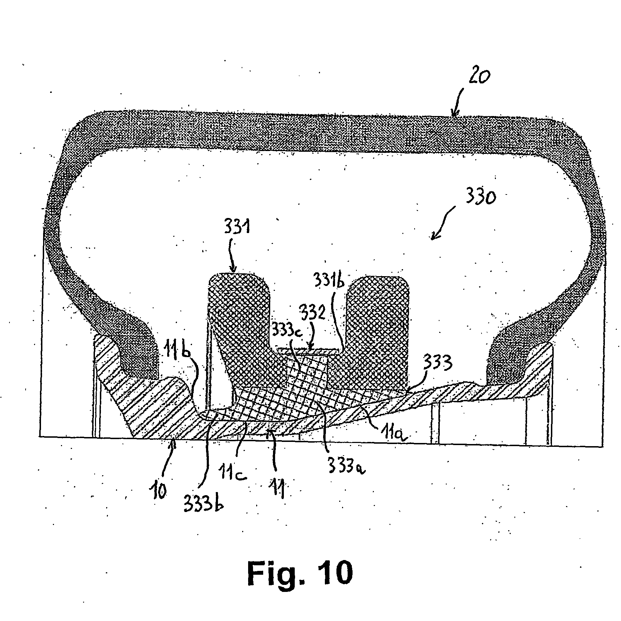

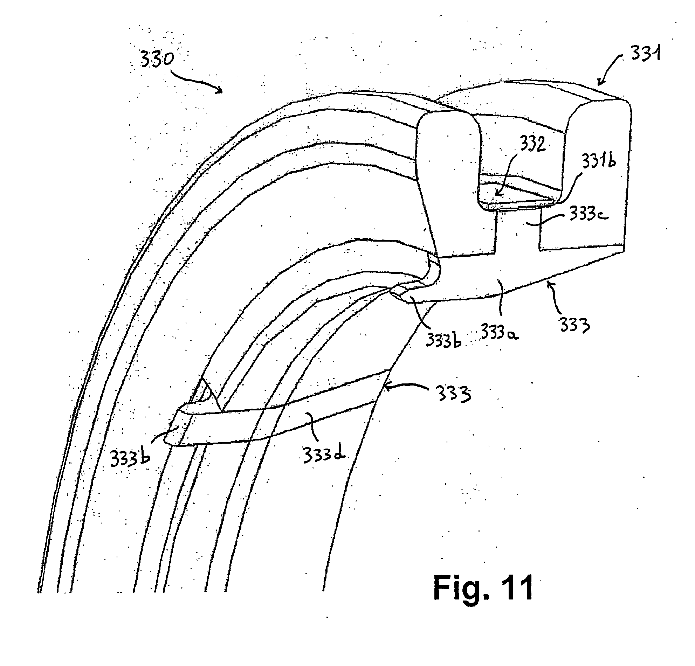

Le dispositif de roulage à plat 330 selon le second exemple de réalisation du second mode de l'invention qui est illustré aux figures 10 et 11 se différencie essentiellement de celui des figures 7 et 9, en ce que les pattes axiales de calage 333 qui sont fixées à l'anneau 331 sont montées traversantes, non seulement dans la direction axiale de l'anneau 331, mais également dans la direction radiale de ce dernier. En effet, ces pattes de calage 333 présentent chacune sensiblement une forme de T inversé, dont :
- la base axiale 333a s'étend sous l'anneau 331 en présentant une face inférieure 333d adaptée au fond 11a du creux de jante 11 à utiliser en faisant axialement saillie d'un côté de ce dernier par une excroissance latérale 333b en forme de lèvre destinée à appuyer sur la paroi latérale 11 b du creux de jante 11, et dont
- le jambage radial 333c affleure la gorge médiane 331 b de l'anneau 331.

Cette gorge 331 b, qui est ainsi en partie formée par ces pattes 333, est recouverte d'une ceinture de serrage 332 analogue aux ceintures 32, 132 et 232 précitées.

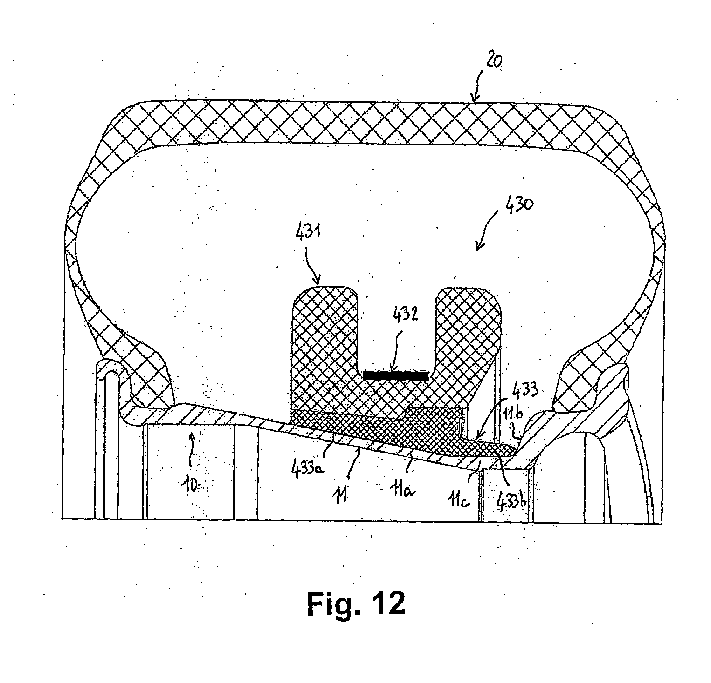

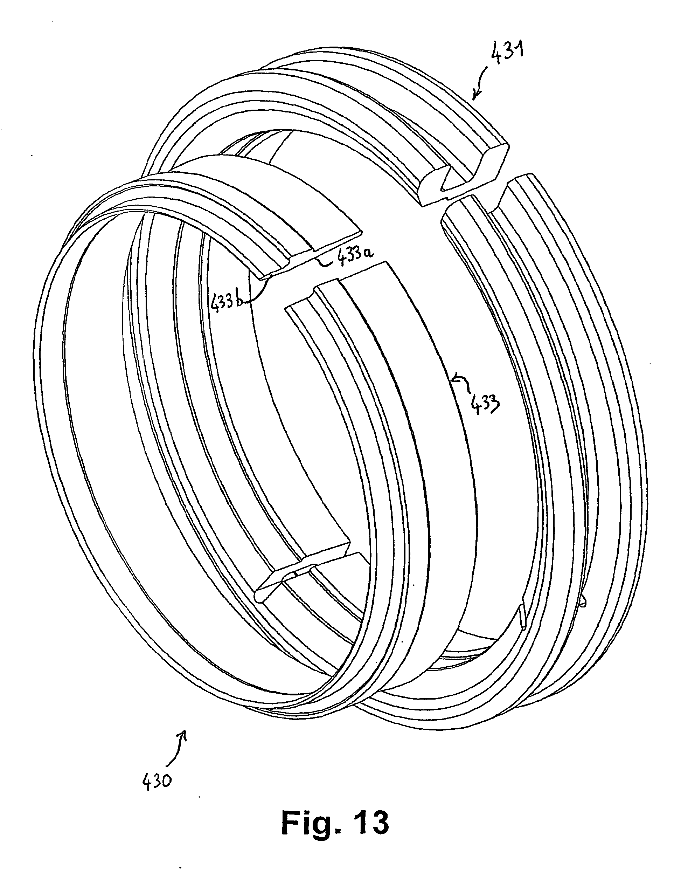

Le dispositif de roulage à plat 430 selon le troisième mode de réalisation de l'invention qui est illustré aux figures 12 et 13 se différencie essentiellement de celui des figures 10 et 11, en ce que les pattes axiales de calage 333 solidarisées de manière traversante à l'anneau 331 ont été ici remplacées par une semelle annulaire 433 disposée sous l'anneau 431. La semelle 433 présente une face inférieure 433a adaptée au fond 11 a du creux de jante 11 à utiliser, elle présente en l'un de ses côtés une excroissance axiale circonférentielle 433b destinée à appuyer sur une paroi latérale 11b du creux 11 et cette semelle 433 est surmontée par l'anneau 431, lui-même étant revêtu d'une ceinture de serrage 432.

Comme visible à la figure 13, la semelle 433 selon cet exemple de réalisation peut être avantageusement formée d'un seul tenant en étant fendue, étant par exemple réalisée en matière plastique relativement rigide pour un calage correct de l'anneau 431 la surmontant dans le creux de jante 11, et cet anneau 431 peut être également d'un seul tenant et fendu, étant de préférence réalisé en un matériau plus souple de type élastomère ou élastomère thermoplastique, pour un amortissement satisfaisant des chocs.

## Revendications

1. Dispositif de roulage à plat (30, 130, 230, 330, 430) destiné à équiper un ensemble monté (1, 101, 201) sans chambre à air pour véhicule automobile qui comprend une jante de roue (10) asymétrique de type monobloc à creux de jante (11) circonférentiel et une enveloppe de pneumatique (20) montée sur la jante, le dispositif étant destiné à soutenir l'enveloppe suite à une chute de pression de gonflage à l'intérieur de l'ensemble monté, ce dispositif comprenant :
- une structure annulaire de soutien qui comporte un anneau (31, 31', 31", 31"', 131, 231, 331, 431) présentant une face de soutien (31a) radialement externe destinée à soutenir l'enveloppe en roulage à plat, et
- au moins une ceinture annulaire de serrage (32, 132, 232, 332, 432) enserrant circonférentiellement l'anneau de sorte à le maintenir sensiblement au contact de la jante en roulage,
au moins un renfoncement radial (31 b) étant formé circonférentiellement dans ladite face de soutien, ladite ou chaque ceinture de serrage étant appliquée sur ce renfoncement en étant radialement en retrait par rapport à ladite face de soutien,
**caractérisé en ce que** ladite structure de soutien comporte des moyens (33, 133, 233, 333, 433) pour la caler dans ledit creux de jante (11), en la montant en appui sur au moins une paroi latérale (11b) dudit creux, une face radialement interne (31c, 333d, 433a) de ces moyens de calage étant conçue pour épouser le profil axial d'un fond (11a) dudit creux.

2. Dispositif de roulage à plat (30) selon la revendication 1, **caractérisé en ce que** lesdits moyens de calage (33), tels qu'une lèvre circonférentielle axialement en saillie sur au moins une face latérale (31d) de l'anneau (31, 31', 31", 31"'), font partie intégrante dudit anneau, lequel forme ladite structure qui est monobloc.

3. Dispositif de roulage à plat (130, 230, 330) selon la revendication 1, **caractérisé en ce que** lesdits moyens de calage comportent une pluralité de pattes axiales (133, 233, 333) espacées dans la direction circonférentielle qui sont fixées audit anneau (131, 231, 331), par exemple par clipsage ou collage, chaque patte de calage présentant en l'un de ses côtés une excroissance axiale (333b) destinée à appuyer sur ladite paroi latérale (11 b) dudit creux de jante (11).

4. Dispositif de roulage à plat (130, 230) selon la revendication 3, **caractérisé en ce que** lesdites pattes de calage (133, 233) sont rapportées sous ledit anneau (131, 231), et **en ce que** de préférence ces pattes de calage (133) sont fixées à ladite face radialement interne (131c) dudit anneau (131) en faisant saillie radialement vers l'intérieur de cette face, ou bien ces pattes de calage (233) sont logées dans des évidements axiaux (231f) formés dans ledit anneau (231) en étant confinées à l'intérieur de ce dernier.

5. Dispositif de roulage à plat (330) selon la revendication 3, **caractérisé en ce que** lesdites pattes de calage (333) présentent chacune sensiblement une forme de T inversé, dont la base axiale (333a) s'étend sous ledit anneau (331) et est destinée à épouser le fond (11a) dudit creux de jante (11) en faisant axialement saillie dudit côté par ladite excroissance (333b), et dont le jambage radial (333c) affleure ledit renfoncement radial (331 b), lequel est en partie formé par ces pattes.

6. Dispositif de roulage à plat (430) selon la revendication 1, **caractérisé en ce que** lesdits moyens de calage comportent une semelle annulaire (433) dont la face radialement interne (433a) est destinée à épouser le fond (11a) dudit creux de jante (11) et qui présente en l'un de ses côtés une excroissance axiale circonférentielle (433b) destinée à appuyer sur ladite paroi latérale (11 b) dudit creux de jante et qui est surmontée par ledit anneau (431).

7. Dispositif de roulage à plat (430) selon la revendication 6, **caractérisé en ce que** ladite semelle (433) est surmontée par ledit anneau (431) sans être solidarisée avec ce dernier ou bien en étant fixée à ce dernier.

8. Dispositif (430) selon la revendication 6 ou 7, **caractérisé en ce que** ladite semelle (433) est formée d'un seul tenant, étant de préférence fendue, ou bien est formée d'une pluralité de secteurs de semelle en arcs de cercle qui sont juxtaposés deux à deux dans la direction circonférentielle.

9. Dispositif de roulage à plat (30, 130, 230, 330, 430) selon une des revendications précédentes, **caractérisé en ce que** ledit ou l'un au moins desdits renfoncement(s) (31b) est formé d'une gorge circonférentielle pour l'anneau (31, 31', 31", 31"', 131, 231, 331, 431).

10. Dispositif de roulage à plat (30, 130, 230, 330, 430) selon une des revendications précédentes, **caractérisé en ce que** ledit anneau (31, 31', 31", 31"', 131, 231, 331, 431) est réalisé en un matériau élastomère ou élastomère thermoplastique de sorte à amortir les chocs en roulage, lesdits moyens de calage (33, 133, 233, 333, 433) étant réalisés en une matière plastique.

11. Dispositif de roulage à plat (30, 130, 230) selon la revendication 10, **caractérisé en ce que** ledit anneau (31, 31', 31") est formé d'un seul tenant et est de type fermé, et **en ce que** de préférence l'anneau (31") comporte au moins une zone rétrécie (R1 à R4) au moins dans la direction radiale par rapport au reste de l'anneau, de sorte à augmenter la déformabilité dudit anneau lors de son insertion à l'intérieur de l'ensemble monté (1, 101, 201).

12. Dispositif (30) de roulage à plat selon une des revendications 1 à 9, **caractérisé en ce que** l'anneau (31', 31"') est réalisé en un matériau thermoplastique.

13. Dispositif de roulage à plat (30) selon la revendication 10 ou 12, **caractérisé en ce que** l'anneau (31') est formé d'un seul tenant et est de type ouvert via deux extrémités circonférentielles (E1 et E2) disposées en regard l'une de l'autre, ou bien **en ce que** l'anneau (31"') est scindé en plusieurs secteurs indépendants en arc de cercle (S1 et S2) juxtaposés circonférentiellement.

14. Dispositif de roulage à plat (30, 130, 230) selon la revendication 13, **caractérisé en ce que** l'anneau (31', 31"') est pourvu d'un lien élastique annulaire sur le fond dudit ou de chaque renfoncement (31b), ce lien élastique étant destiné à maintenir ledit anneau dans ledit creux de jante (11) et étant surmonté par ladite ceinture de serrage (32, 132, 232).

15. Dispositif de roulage à plat (30, 130, 230, 330, 430) selon une des revendications précédentes, **caractérisé en ce que** ladite ou chaque ceinture de serrage (32, 132, 232, 332, 432) est de type métallique, à serrage réglable et verrouillable par des moyens mécaniques, ou bien est de type sangle fermée en tissu.

16. Dispositif de roulage à plat (30, 130, 230, 330, 430) selon la revendication 9, **caractérisé en ce que** l'anneau (31, 31', 31", 31"', 131, 231, 331, 430) présente sensiblement, vu en section axiale, une forme de U dont la base est montée dans ledit creux de jante (11) et qui définit ledit renfoncement (31b) en forme de gorge recevant ladite ceinture de serrage (32, 132, 232, 332, 432).

17. Ensemble monté (1) sans chambre à air pour véhicule automobile, comprenant une jante de roue (10) asymétrique de type monobloc à creux de jante (11) circonférentiel, une enveloppe de pneumatique (20) montée contre des rebords (12, 13) axialement interne et externe de ladite jante et un dispositif de roulage à plat (30, 130, 230, 330, 430) monté sur ladite jante et destiné à soutenir ladite enveloppe suite à une chute de pression de gonflage à l'intérieur dudit ensemble monté, **caractérisé en ce que** ledit dispositif est tel que défini à l'une des revendications précédentes.

18. Ensemble monté (1) selon la revendication 17, **caractérisé en ce que** lesdits moyens de calage (33, 133, 233, 333, 433), qui définissent ladite face radialement interne (31c, 131c, 333d, 433a) de ladite structure de soutien (31, 131, 231, 331, 431), sont montés sur ce creux de jante sur toute la largeur axiale de ce dernier, de telle sorte que cette structure soit axialement distante desdits rebords de jante (12 et 13), ladite ou chaque ceinture de serrage (32, 132, 232, 332, 432) étant de type métallique à serrage réglable et verrouillable par des moyens mécaniques ou bien de type sangle fermée en tissu.

## Claims

1. A run-flat device (30, 130, 230, 330, 430) intended to be fitted to a tubeless mounted assembly (1, 101, 201) for a motor vehicle which comprises an asymmetric wheel rim (10) of the one-piece type with a circumferential rim well (11) and a tire cover (20) mounted on the rim, the device being intended to support the cover following a drop in inflation pressure inside the mounted assembly, this device comprising:
- an annular support structure which comprises a ring (31, 31', 31", 31"', 131, 231, 331, 431) that has a radially external support face (31a) intended to support the cover under run-flat conditions, and
- at least one annular clamping belt (32, 132, 232, 332, 432) circumferentially clamping the ring in such a way as to keep it substantially in contact with the rim during running,
at least one radial indentation (31b) being formed circumferentially in said support face, said or each clamping belt being applied to this indentation and being radially set back from said support face, **characterized in that** said support structure comprises means (33, 133, 233, 333, 433) for wedging it in said rim well (11) while mounting it bearing against at least one side wall (11b) of said well, a radially internal face (31c, 33d, 433a) of these wedging means being designed to espouse the axial profile of a bottom (11a) of said well.

2. The run-flat device (30) as claimed in claim 1, **characterized in that** said wedging means (33), such as a circumferential lip projecting axially on at least one lateral face (31d) of the ring (31, 31', 31", 31"'), form an integral part of said ring, which forms said structure which is a one-piece structure.

3. The run-flat device (130, 230, 330) as claimed in claim 1, **characterized in that** said wedging means comprise a plurality of axial tabs (133, 233, 333) spaced in the circumferential direction, which are fixed to said ring (131, 231, 331) for example by clipping or bonding, each wedging tab having on one of its sides an axial protrusion (333b) intended to press against said side wall (11b) of said rim well (11).

4. The run-flat device (130, 230) as claimed in claim 3, **characterized in that** said wedging tabs (133, 233) are attached under said ring (131, 231), and preferably in that the wedging tabs (133) are fixed to said radially internal face (131c) of said ring (131), projecting radially toward the inside from this face, or alternatively these wedging tabs (233) are housed in axial recesses (231f) formed in said ring (231), being confined inside the latter.

5. The run-flat device (330) as claimed in claim 3, **characterized in that** said wedging tabs (333) are each substantially in the shape of an inverted T, the axial base (333a) of which extends under said ring (331) and is intended to espouse the bottom (11a) of said rim well (11), while projecting axially from said side via said protrusion (333b), and of which the radial leg (333c) lies flush with said radial indentation (331b) which is in part formed by these tabs.

6. The run-flat device (430) as claimed in claim 1, **characterized in that** said wedging means comprise an annular sole (433) of which the radially internal face (433a) is intended to espouse the bottom (11a) of said rim well (11) and which on one of its sides has a circumferential axial protrusion (433b) intended to bear against said lateral wall (11b) of said rim well and which is surmounted by said ring (431).

7. The run-flat device (430) as claimed in claim 6, **characterized in that** said sole (433) is surmounted by said ring (431) without being secured thereto or else being attached thereto.

8. The device (430) as claimed in claim 6 or 7, **characterized in that** said sole (433) is formed as a single piece, being preferably split, or else is formed of a plurality of sole sectors shaped as arcs of a circle, which are juxtaposed next to one another in the circumferential direction.

9. The run-flat device (30, 130, 230, 330, 430) as claimed in one of the preceding claims, **characterized in that** said or at least one of said indentation(s) (31b) is formed of a circumferential groove for the ring (31, 31', 31", 31"', 131, 231, 331, 431).

10. The run-flat device (30, 130, 230, 330, 430) as claimed in one of the preceding claims, **characterized in that** said ring (31, 31', 31'', 31''', 131, 231, 331, 431) is made of an elastomer or thermoplastic elastomer material so as to absorb shocks when running, said wedging means (33, 133, 233, 333, 433) being made of a plastic material.

11. The run-flat device (30, 130, 230) as claimed in claim 10, **characterized in that** said ring (31, 31', 31") is formed as a single piece and is of the closed type, and preferably **in that** the ring (31") comprises at least one region (R1 to R4) that is narrowed at least in the radial direction by comparison with the rest of the ring so as to increase the deformability of said ring when it is being inserted into the mounted assembly (1, 101, 201).

12. The run-flat device (30) as claimed in one of claims 1 to 9, **characterized in that** the ring (31', 31") is made of a thermoplastic material.

13. The run-flat device (30) as claimed in claim 10 or 12, **characterized in that** the ring (31') is formed as a single piece and is of the open type via two circumferential ends (E1 and E2) positioned facing one another, or else **in that** the ring (31"') is split into several independent sectors (S1 and S2) shaped as arcs of a circle, circumferentially juxtaposed.

14. The run-flat device (30, 130, 230) as claimed in claim 13, **characterized in that** the ring (31', 31"') is provided with an annular elastic tie on the bottom of said or of each indentation (31b), this elastic tie being intended to keep said ring in said rim well (11) and being surmounted by said clamping belt (32, 132, 232) .

15. The run-flat device (30, 130, 230, 330, 430) as claimed in one of the preceding claims, **characterized in that** said or each clamping belt (32, 132, 232, 332, 432) is of metal type, with adjustable clamping and able to be locked by mechanical means, or else is of the closed strap type made of fabric.

16. The run-flat device (30, 130, 230, 330, 430) as claimed in claim 9, **characterized in that** the ring (31, 31', 31", 31"', 131, 231, 331, 431) has, when viewed in axial section, a more or less U shape, of which the base is mounted in said rim well (11) and which defines said groove-like indentation (31b) that accommodates said clamping belt (32, 132, 232, 332, 432).

17. A tubeless mounted assembly (1) for a motor vehicle, comprising an asymmetric wheel rim (10) of the one-piece type with a circumferential rim well (11), a tire cover (20) mounted against the axially internal and external flanges (12, 13) of said rim and a run-flat device (30, 130, 230, 330, 430) mounted on said rim and intended to support said cover following a drop in inflation pressure inside said mounted assembly, **characterized in that** said device is as defined in one of the preceding claims.

18. The mounted assembly (1) as claimed in claim 17, **characterized in that** said wedging means (33, 133, 233, 333, 433) which define said radially internal face (31c, 131c, 333d, 433a) of said support structure (31, 131, 231, 331, 431) are mounted on this rim well across the entire axial width thereof, such that this structure is axially distant from said rim flanges (12 and 13), said or each clamping belt (32, 132, 232, 332, 432) being of the metallic type with adjustable clamping and able to be locked by mechanical means or alternatively of the closed strap type made of fabric.

## Patentansprüche

1. Notlaufvorrichtung (30, 130, 230, 330, 430), die dazu bestimmt ist, eine montierte Baueinheit (1, 101, 201) ohne Luftkammer für Kraftfahrzeuge auszustatten, die eine asymmetrische Radfelge (10) vom einstückigen Typ mit Umfangsfelgenhohlraum (11) und einen Reifenmantel (20), der auf der Felge montiert ist, aufweist, wobei die Vorrichtung dazu bestimmt ist, den Mantel im Anschluss an einem Abfall des Aufblasdrucks im Inneren der montierten Baueinheit zu stützen, wobei die Vorrichtung aufweist:
eine ringförmige Stützstruktur, die einen Ring (31, 31', 31", 31"', 131, 231, 331, 431) aufweist, der eine radial äußere Stützfläche (31a) aufweist, die dazu bestimmt ist, den Mantel beim Notlauf zu stützen, und
zumindest einen ringförmigen Spanngürtel (32, 132, 232, 332, 432), der in Umfangsrichtung den Ring in der Weise umschlingt, dass dieser beim Fahren im Wesentlichen in Kontakt mit der Felge gehalten wird,
wobei zumindest eine Radialverstärkung (31b) in Umfangsrichtung in der Stützfläche ausgebildet ist, wobei der oder jeder Spanngürtel auf die Verstärkung in einer solchen Weise aufgebracht ist, dass dieser in Bezug auf die Stützfläche radial zurückgesetzt ist,
**dadurch gekennzeichnet, dass** die Stützstruktur eine Einrichtung (33, 133, 233, 333, 433) zum Abstützen von dieser in dem Felgenhohlraum (11) aufweist, wobei diese auf zumindest eine Seitenwand (11 b) des Hohlraums gestützt montiert ist, wobei eine radiale Innenfläche (31c, 333d, 433a) dieser Abstützeinrichtung so gestaltet ist, dass sich diese an das Axialprofil eines Bodens (11a) des Hohlraums anpasst.

2. Notlaufvorrichtung (30) nach Anspruch 1, **dadurch gekennzeichnet, dass** die Abstützeinrichtung (33), wie z.B. eine Umfanglippe, die axial auf zumindest einer Seitenfläche (31 d) des Rings (31, 31', 31 ", 31"') vorsteht, einen integrierenden Teil des Rings bilden, der die einstückige Struktur bildet.

3. Notlaufvorrichtung (13, 230, 330) nach Anspruch 1, **dadurch gekennzeichnet, dass** die Abstützeinrichtung eine Vielzahl von Axialfüßen (133, 233, 333) aufweist, die in Umfangsrichtung beabstandet sind und die an dem Ring (131, 231, 331) beispielsweise durch Klipsbefestigung oder Kleben befestigt sind, wobei jeder Abstützfuß in einer seiner Seiten einen Axialvorsprung (333b) aufweist, der dazu bestimmt ist, auf die Seitenwand (11b) des Felgenhohlraums (11) zu drücken.

4. Notlaufvorrichtung (130, 230) nach Anspruch 3, **dadurch gekennzeichnet, dass** die Abstützfüße (133, 233) unter dem Ring (131, 231) angebracht sind und dass vorzugsweise diese Abstützfüße (133) an der radialen Innenfläche (131c) des Rings (131) befestigt sind, wobei diese radial nach innen von der Fläche vorstehen, oder auch diese Abstützfüße (233) in Axialaussparungen (231f) untergebracht sind, die in dem Ring (231) ausgebildet sind, wobei diese an das Innere von letztgenanntem angrenzen.

5. Notlaufvorrichtung (330) nach Anspruch 3, **dadurch gekennzeichnet, dass** die Abstützfüße (333) jeweils im Wesentlichen eine Form eines umgedrehten T aufweisen, deren Axialbasis (333a) sich unter dem Ring (331) erstreckt und dazu bestimmt ist, sich an den Boden (11a) des Felgenhohlraums (11) anzupassen, indem ein axiales Vorstehen von dieser Seite vermittels des Vorsprungs (333b) vorliegt, und deren radiales Stützglied (333c) die Radialverstärkung (331 b) nivelliert, wobei diese teilweise durch diese Füße gebildet ist.

6. Notlaufvorrichtung (430) nach Anspruch 1, **dadurch gekennzeichnet, dass** die Abstützeinrichtung eine ringförmige Einlage (433) aufweist, deren radiale Innenfläche (433a) dazu bestimmt ist, sich an den Boden (11 a) des Felgenhohlraums (11) anzupassen, und die in einer ihrer Seiten einen axialen Umfangsvorsprung (433b) aufweist, der dazu bestimmt ist, auf die Seitenwand (11 b) des Felgenhohlraums zu drücken, und die durch den Ring (431) überragt wird.

7. Notlaufvorrichtung (430) nach Anspruch 6, **dadurch gekennzeichnet, dass** die Einlage (433) von dem Ring (431) überragt wird, ohne dass diese mit diesem fest verbunden ist oder auch an diesem befestigt ist.

8. Notlaufvorrichtung (430) nach Anspruch 6 oder 7, **dadurch gekennzeichnet, dass** die Einlage (433) durch einen einzigen Träger gebildet ist, der vorzugsweise geschlitzt ist, oder auch von einer Vielzahl von Kreisenbogen-Einlage-Segmenten gebildet ist, die paarweise in Umfangsrichtung nebeneinander angeordnet sind.

9. Notlaufvorrichtung (30, 130, 230, 330, 430) nach einem der vorhergehenden Ansprüche, **dadurch gekennzeichnet, dass** die Verstärkung oder zumindest eine der Verstärkungen (31 b) von einer Umfangsauskehlung für den Ring (31, 31', 31 ", 31"', 131, 231, 331, 431) gebildet ist.

10. Notlaufvorrichtung (30, 130, 230, 330, 430) nach einem der vorhergehenden Ansprüche, **dadurch gekennzeichnet, dass** der Ring (31, 31', 31", 31 "', 131, 231, 331, 431) aus einem Elastomermaterial oder einem Thermoplast-Elastomer in der Weise gebildet ist, dass beim Fahren die Stöße gedämpft werden, wobei die Abstützeinrichtung (33, 133, 233, 333, 433) aus einem Plastikmaterial umgesetzt ist.

11. Notlaufvorrichtung (30, 130, 230) nach Anspruch 10, **dadurch gekennzeichnet, dass** der Ring (31, 31', 31 ") aus einem einzigen Träger gebildet ist und vom geschlossenen Typ ist, und dass vorzugsweise der Ring (31 ") zumindest eine verengte Zone (R1 bis R4) zumindest in Radialrichtung in Bezug auf den Rest des Rings in der Weise aufweist, dass sich das Formänderungsvermögen des Ringes beim Einfügen in des Innere der montierten Baueinheit (1, 101, 201) erhöht.

12. Notlaufvorrichtung (30) nach einem der Ansprüche 1 bis 9, **dadurch gekennzeichnet, dass** der Ring (31', 31"') aus einem Thermoplastmaterial ausgeführt ist.

13. Notlaufvorrichtung (30) nach Anspruch 10 oder 12, **dadurch gekennzeichnet, dass** der Ring (31') aus einem einzigen Träger ausgebildet ist und vom offenen Typ über zwei Umfangsendabschnitte (E1 und E2) ist, die einander gegenüberliegen, oder auch der Ring (31"') in mehrere unabhängige Kreisbogensegmente (S1 und S2) aufgeteilt ist, die in Umfangsrichtung aneinandergereiht sind.

14. Notlaufvorrichtung (30, 13, 230) nach Anspruch 13, **dadurch gekennzeichnet, dass** der Ring (31', 31"') mit einer ringförmigen elastischen Verbindung auf dem Boden von der oder jeder Verstärkung (31 b) versehen ist, wobei die elastische Verbindung dazu bestimmt ist, den Ring in dem Felgenhohlraum (11) zu halten und durch den Spanngurt (32, 132, 232) überragt zu sein.

15. Notlaufvorrichtung (30, 130, 230, 330, 430) nach einem der vorhergehenden Ansprüche, **dadurch gekennzeichnet, dass** der oder jeder Spanngurt (32, 132,232, 332, 432) vom Metalltyp, mit regelbarer Spannung und durch eine mechanische Einrichtung verriegelbar ist oder auch vom Typ geschlossener Stoffgurt ist.

16. Notlaufvorrichtung (30, 130, 230, 330, 430) nach Anspruch 9, **dadurch gekennzeichnet, dass** der Ring (31, 31', 31", 31"', 131, 231, 331, 430) im Wesentlichen im Axialschnitt eine U-Form aufweist, deren Basis in dem Felgenhohlraum (11) montiert ist und die die Verstärkung (31 b) in Auskehlungsform definiert, die den Spanngurt (32, 132, 232, 332, 432) aufnimmt.

17. Montierte Baueinheit (1) ohne Luftkammer für Kraftfahrzeuge, die eine asymmetrische Radfelge (10) vom einstückigen Typ mit Umfangsfelgenhohlraum (11), einen Reifenmantel (20), der gegen die axial inneren und äußeren Ränder (12, 13) der Felge montiert ist, und eine Notlaufvorrichtung (30, 130, 230, 330, 430) aufweist, die auf der Felge montiert ist und dazu bestimmt ist, den Mantel im Anschluss an einem Abfall des Aufblasdrucks im Inneren der montierten Baueinheit zu stützen, **dadurch gekennzeichnet, dass** die Vorrichtung eine nach einem der vorhergehenden Ansprüche ist.

18. Montierte Baueinheit (1) nach Anspruch 17, **dadurch gekennzeichnet, dass** die Abstützeinrichtung (33, 133, 233, 333, 433), die die radiale Innenfläche (31 c, 131 c, 333d, 433a) der Stützstruktur (31, 131, 231, 331, 431) definiert, auf dem Felgenhohlraum über die gesamte Axialbreite davon in der Weise montiert ist, dass diese Struktur von den Rändern der Felge (12 und 13) axial beabstandet ist, wobei der oder jeder Spanngurt (32, 132, 232, 332, 432) vom Metalltyp mit regelbarer Spannung und durch eine mechanische Einrichtung verriegelbar ist oder auch vom Typ geschlossener Stoffgurt ist.
